# EUROPÄISCHE PATENTANMELDUNG

(11) **EP 4 682 480 A1**
(43) Veröffentlichungstag der Anmeldung: **21.01.2026**
(21) Anmeldenummer: 25187121.6
(22) Anmeldetag: 03.07.2025
(51) Int. Cl.: G01F 5/00, G01F 1/10, G01F 1/115, G01F 15/14, G01F 15/18, G01F 1/06, G01F 1/075

(54) **VORRICHTUNG UND VERFAHREN ZUR VOLUMENSTROM- UND QUALITÄTSBESTIMMUNG EINES GASFÖRMIGEN FLUIDS**

(30) Priorität: 18.07.2024 DE 102024120359
(71) Anmelder: ebm-papst Mulfingen GmbH & Co. KG, 74673 Mulfingen (DE)
(72) Erfinder: Sauer, Thomas, 97980 Bad Mergentheim (DE); Walter, Sven, 97980 Bad Mergentheim-Rengershausen (DE); Gebert, Daniel, 74613 Öhringen (DE)
(74) Vertreter: RavensPAT Patentanwälte Partnerschaft mbB

(57) **Zusammenfassung**

Vorrichtung 1 zur Volumenstrom- und Qualitätsbestimmung eines gasförmigen Fluids umfassend einen Hauptkanal 2, einen Bypasskanal 3, einen Sensorbereich 4, sowie ein Primäranemometer 5, wobei der Hauptkanal 2 zur Führung eines Hauptstroms 8 des Fluids ausgebildet ist, wobei der Bypasskanal 3 und der Sensorbereich 4 einen Bypass 9 zu dem Hauptstrom 8 bilden, wobei der Bypass 9 insbesondere parallel zu dem Hauptstrom 8 ausgebildet ist, wobei der Bypasskanal 3 dazu ausgebildet ist, einen Teil des Hauptstroms 8 als Teilstrom 10 in den Sensorbereich 4 zu leiten, wobei der Sensorbereich 4 wenigstens einen Fluidqualitätssensor 11, wenigstens einen Drehzahlsensor 12 und eine Auswertungselektronik 13 umfasst, wobei das Primäranemometer 5 innerhalb des Hauptkanals 2 zur Erfassung des gesamten Hauptstroms 8 ausgebildet ist und mit dem Drehzahlsensor 12 in einem Wirkzusammenhang steht.

## Beschreibung

Die vorliegende Erfindung betrifft das technische Gebiet der Messung von Volumenströmen zur Bewertung einer Fluidqualität in Rohrleitungssystemen.

Derartige Vorrichtungen und Verfahren sind bereits bekannt.

Beispielsweise offenbart das Dokument EP 3 106 671 B1 eine Düsenvorrichtung zur Luftförderung bei einem Gebläse, umfassend ein Düsengehäuse mit einer Außenwandfläche, wobei an der Außenwandfläche ein Staubabscheider mit mindestens einer Strömungseintrittsöffnung und mindestens einer Strömungsaustrittsöffnung vorgesehen ist und die mindestens eine Strömungseintrittsöffnung über mindestens eine Gehäusewandöffnung mit einem Inneren der Düsenvorrichtung strömungsverbunden ist, so dass ein Teil der durch die Düsenvorrichtung geförderten Luft als Bypassströmung durch den Staubabscheider strömt, wobei an der mindestens einen Strömungsaustrittsöffnung des Staubabscheiders ein Sensor zur Messung von Parametern der geförderten Luft derart angeordnet ist, dass die aus der mindestens einen Stromaustrittsöffnung des Staubabscheiders strömende Bypassströmung unmittelbar auf den Sensor trifft.

Als technische Aufgabe kann das Verbessern des Standes der Technik, sowie das Entwickeln von Alternativen hierzu angesehen werden.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkung zu realisieren.

Der Schutzbereich der vorliegenden Erfindung ist durch die Patentansprüche gegeben und wird durch die in der Beschreibung erläuterten oder den Figuren gezeigten Merkmale nicht beschränkt.

Gemäß einem Aspekt wird die technische Aufgabe der Erfindung gelöst durch eine Vorrichtung zur Volumenstrom- und Qualitätsbestimmung eines gasförmigen Fluids umfassend einen Hauptkanal, einen Bypasskanal, einen Sensorbereich, sowie ein Primäranemometer, wobei der Hauptkanal zur Führung eines Hauptstroms des Fluids ausgebildet ist, wobei der Bypasskanal und der Sensorbereich einen Bypass zu dem Hauptstrom bilden, wobei der Bypass insbesondere parallel zu dem Hauptstrom ausgebildet ist, wobei der Bypasskanal dazu ausgebildet ist, einen Teil des Hauptstroms als Teilstrom in den Sensorbereich zu leiten, wobei der Sensorbereich wenigstens einen Fluidqualitätssensor und wenigstens einen Drehzahlsensor umfasst, wobei der Sensorbereich eine Auswertungselektronik umfasst, wobei das Primäranemometer innerhalb des Hauptkanals zur Erfassung des gesamten Hauptstroms ausgebildet ist und mit dem Drehzahlsensor in einem Wirkzusammenhang steht.

In anderen Worten ist der Bypasskanal derart gestaltet, den von dem Hauptstrom abgezweigten Teilstrom auf ein Maß zu reduzieren, bei der eine verbesserte Fluidqualitätsmessung ermöglicht wird.

Insbesondere bei kleinen Volumenströmen kann vorteilhaft eine Messgenauigkeit verbessert und erhöht werden. Auch eine ungünstige Beeinflussung der Sensoren untereinander kann dadurch verringert und vermieden werden, was sich zusätzlich vorteilhaft auf die Messgenauigkeit auswirken kann. Darüber hinaus können Verschmutzungen, die ein Messergebnis negativ beeinflussen könnten, detektiert werden und die Messgenauigkeit auch dadurch weiter verbessert werden.

In einer technisch vorteilhaften Ausführungsform ist vorgesehen, dass der Sensorbereich einen Drehrichtungssensor umfasst, wobei das Primäranemometer innerhalb des Hauptkanals zur Erfassung des gesamten Hauptstroms ausgebildet ist und mit dem Drehzahlsensor und/oder dem Drehrichtungssensor in einem Wirkzusammenhang steht.

Auf diese Art kann eine Messeinheit gebildet werden, die weitere relevante Messwerte zur Verfügung stellt und bei der die bereits genannten Vorteile zum Tragen kommen.

Darüber hinaus ist in einer weiteren technisch vorteilhaften Ausführungsform vorgesehen, dass der Bypass mittels einer an dem Hauptkanal angeordneten Verschalung oder mittels einer zumindest teilweise in dem Hauptkanal angeordnete Verschalung oder mittels einer Sensorbox ausgebildet ist, wobei die Verschalung oder die Sensorbox wenigstens den Bypasskanal und/oder den Sensorbereich und/oder die Auswertungselektronik und/oder den wenigstens einen Fluidqualitätssensor und/oder den Drehzahlsensor und/oder den Drehrichtungssensor umfasst.

Vorteilhaft kann dadurch sowohl bei der Herstellung, als auch bei der Installation oder bei einem Einsatz der Vorrichtung eine größere Flexibilität ermöglicht werden, was sich sowohl ressourcen-, als auch kostengünstig auswirken kann.

Weiterhin ist in einer technisch vorteilhaften Ausführungsform vorgesehen, dass eine gleichförmige Geschwindigkeit des Teilstroms mittels Leitelementen, insbesondere mittels im Sensorbereich angeordneten Leitelementen, erzeugt wird, wobei die Leitelemente bevorzugt mittels einer oder als eine Wandung oder Verstrebung der Verschalung oder der Sensorbox ausgebildet sind.

Vorteilhaft kann mittels der Leitelemente eine möglichst gleichförmige Fluidgeschwindigkeit im Sensorbereich erzeugt werden, was zusätzlich die Messgenauigkeit verbessern kann. Die Leitelemente können beispielsweise eine Wabenstruktur und/oder eine Gitterstruktur aufweisen und/oder als eine Wabenstruktur und/oder eine Gitterstruktur ausgebildet sein.

Außerdem ist in einer technisch vorteilhaften Ausführungsform ist vorgesehen, dass als Fluidqualitätssensor jeweils wenigstens ein Gassensor und/oder ein Partikelsensor und/oder ein Temperatursensor und/oder ein Feuchtigkeitssensor vorgesehen ist, wobei der Partikelsensor insbesondere innerhalb des Bypasskanals angeordnet ist.

Vorteilhaft können dadurch bereits existierende Technologien kostengünstig eingesetzt und zur Anwendung gebracht werden. Weitere Sensoren verbessern die Messgenauigkeit zusätzlich und können herangezogen werden, um bessere Aussagen über die Fluidqualität treffen zu können.

Weiterhin ist in einer technisch vorteilhaften Ausführungsform vorgesehen, dass der Drehrichtungssensor und/oder der Drehzahlsensor als Hallsensor ausgebildet ist/sind, wobei der Drehrichtungssensor und der Drehzahlsensor insbesondere als gemeinsamer Sensor, gebildet aus wenigstens zwei Hallsensoren ausgebildet ist.

Vorteilhaft kann somit der Hauptstrom und dessen Strömungsrichtung detektiert und zur zusätzlichen Verbesserung der Messgenauigkeit herangezogen werden.

Darüber hinaus ist in einer technisch vorteilhaften Ausführungsform vorgesehen, dass der Bypasskanal derart ausgebildet ist, eine Vergrößerung der Querschnittsfläche des Teilstroms um den Faktor 2, insbesondere um den Faktor 2 bis 10, bevorzugt um den Faktor 2 bis 20 zu erzeugen.

Hierdurch kann vorteilhaft die Fluidgeschwindigkeit im Sensorbereich verringert werden, was zusätzlich die Messgenauigkeit verbessern und insbesondere für Sensoren die sensibel auf die Fluidgeschwindigkeit reagieren von Vorteil sein kann.

Außerdem ist in einer technisch vorteilhaften Ausführungsform vorgesehen, dass die Vorrichtung weiterhin ein

Sekundäranemometer, insbesondere ein Heißfilm-Anemometer umfasst, wobei das Sekundäranemometer innerhalb des Teilstroms, insbesondere innerhalb des Bypasses oder des Bypasskanals oder des Sensorbereichs, angeordnet ist.

Vorteilhaft kann hierdurch die Messgenauigkeit, insbesondere hinsichtlich der Verschmutzung im Bypasskanal, zusätzlich verbessert werden.

Weiterhin ist in einer technisch vorteilhaften Ausführungsform vorgesehen, dass das Primäranemometer als Flügelrad-Anemometer ausgebildet ist.

Vorteilhaft können dadurch bereits existierende Technologien kostengünstig eingesetzt und zur Anwendung gebracht werden.

Darüber hinaus ist in einer technisch vorteilhaften Ausführungsform vorgesehen, dass die Fluidqualitätssensoren in einem Abschattungsbereich der Sensorbox angeordnet sind, wobei zwischen dem Teilstrom und dem Abschattungsbereich ein Fluidaustausch entweder mittels Diffusion, oder mittels Zuluftöffnungen stattfindet, wobei die Zuluftöffnungen klein im Verhältnis zu dem Querschnitt des Teilstroms ausgebildet sind und insbesondere innerhalb eines Leitelements und/oder einer Innenwandung und/oder einer Trennwand der Sensorbox angeordnet sind

Hierdurch können im Sensorbereich sehr geringe Fluidbewegungen erzeugt werden, was sich zusätzlich vorteilhaft auf die Messgenauigkeit, insbesondere bei strömungsempfindlichen Sensoren, auswirken kann.

Außerdem ist in einer technisch vorteilhaften Ausführungsform vorgesehen, dass die Fluidqualitätssensoren mittels wenigstens einer Innenwandung, insbesondere einer Trennwand, getrennt voneinander angeordnet sind.

Hierdurch kann eine mögliche gegenseitige Beeinflussung, insbesondere eine thermische Beeinflussung, der Sensoren untereinander zusätzlich verringert und vermieden werden.

Gemäß einem weiteren Aspekt wird die technische Aufgabe der Erfindung gelöst durch ein Verfahren zur Volumenstrom- und Qualitätsbestimmung eines gasförmigen Fluids mittels einer Vorrichtung nach einem der vorangehenden Ansprüche, umfassend die folgenden Verfahrensschritte:
- Abzweigen eines Teils des Hauptstroms des Fluids als Teilstrom mittels des Bypasskanals zu dem Sensorbereich innerhalb des Bypasses und insbesondere Verringern einer Geschwindigkeit des Teilstrom, bevorzugt im Sensorbereich;
- Erfassen der Fluidqualität im Sensorbereich mittels des wenigstens einen Fluidqualitätssensors;
- Erfassen der Drehzahl und/oder der Drehrichtung des Primäranemometers mittels des Drehzahlsensors und des Drehrichtungssensors;
- Auswerten der Sensordaten mittels der Auswertungselektronik

Die bereits genannten Vorteile können so auch vorteilhaft in einem Verfahren zum Tragen kommen.

In einer technisch vorteilhaften Ausführungsform ist vorgesehen, dass eine Verschmutzung innerhalb des Bypasses, insbesondere des Bypasskanals detektiert wird, wobei insbesondere Messwerte des Primäranemometer mit den Messwerten des Sekundäranemometers verglichen werden, wobei bei einer Abweichung dieser Messwerte eine Warnmeldung ausgegeben wird, oder diese Information zur Beeinflussung eines Wartungsintervalls, insbesondere eines Wartungsintervalls der Vorrichtung, genutzt wird.

Dies kann zusätzlich vorteilhaft den Einsatz des Verfahrens begünstigen und einen besseren und insbesondere ausfallsicheren Betrieb ermöglichen.

Ausführungsbeispiele der Erfindung sind in den Figuren schematisch dargestellt und werden im Folgenden näher beschrieben.

Es zeigen
- Fig. 1: eine Explosionszeichnung der Vorrichtung,
- Fig. 2: eine perspektivische Ansicht der Sensorbox,
- Fig. 3: eine Schnittzeichnung vom Eintritt in einen Bypasskanal, sowie
- Fig. 4: eine Schnittzeichnung vom Sensorbereich.

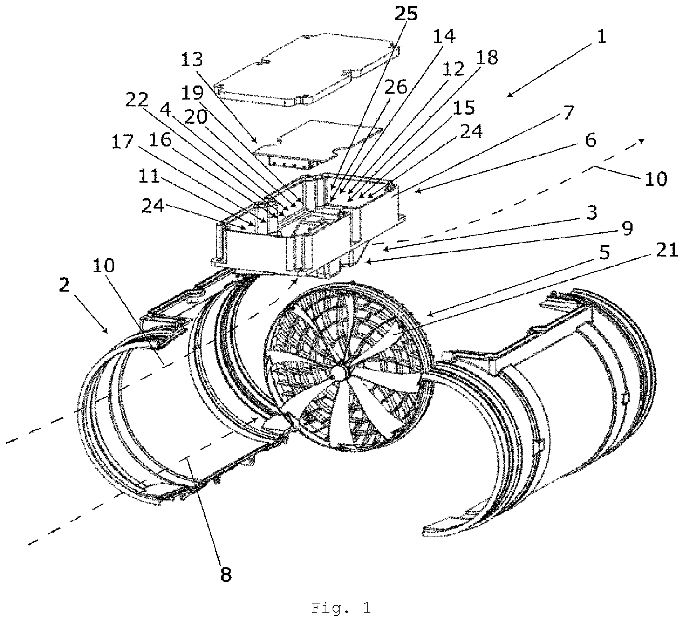

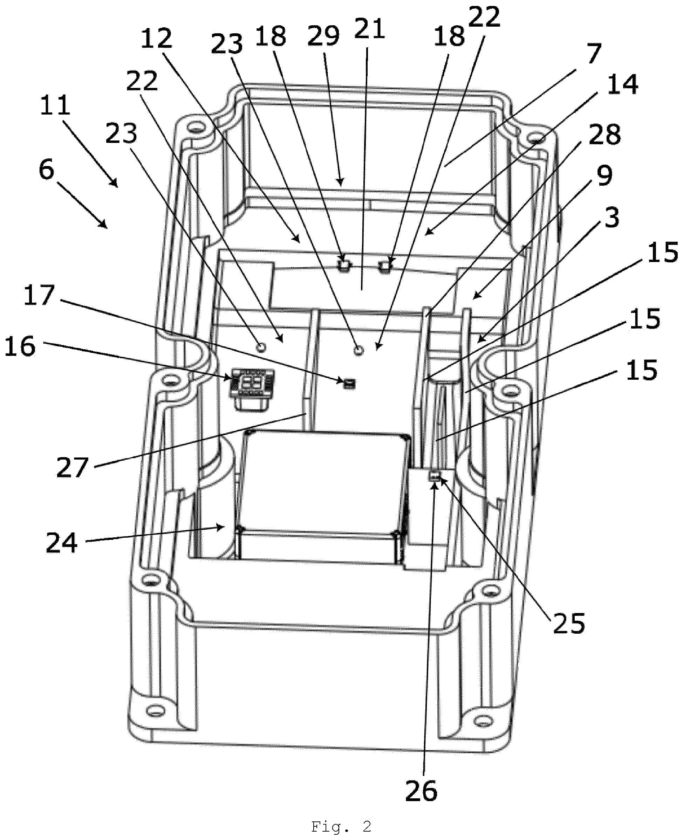

In einer Zusammenschau der Figuren 1 bis 4 ist wie folgt eine Vorrichtung 1 zur Volumenstrom- und Qualitätsbestimmung eines gasförmigen Fluids dargestellt.

Die Vorrichtung 1 umfasst einen Hauptkanal 2, einen Bypasskanal 3, einen Sensorbereich 4, sowie ein Primäranemometer 5. Der Hauptkanal 2 ist zur Führung eines Hauptstroms des Fluids 8 ausgebildet, wobei der Bypasskanal 3 und der Sensorbereich 4 einen Bypass 9 zu dem Hauptstrom 8 bilden. Der Bypass 9 ist parallel zu dem Hauptstrom 8 ausgebildet, wobei der Bypasskanal 3 dazu ausgebildet ist, einen Teil des Hauptstroms 8 als Teilstrom 10 in den Sensorbereich 4 zu leiten. Der Sensorbereich 4 umfasst mehrere Fluidqualitätssensor 11, wenigstens einen Drehzahlsensor 12 und eine Auswertungselektronik 13, wobei das Primäranemometer 5 innerhalb des Hauptkanals 2 zur Erfassung des gesamten Hauptstroms 8 ausgebildet ist und mit dem Drehzahlsensor 12 in einem Wirkzusammenhang steht.

Weiterhin ist dargestellt, dass der Sensorbereich 4 einen Drehrichtungssensor 14 umfasst, wobei das Primäranemometer 5 innerhalb des Hauptkanals 2 zur Erfassung des gesamten Hauptstroms 8 ausgebildet ist und mit dem Drehzahlsensor 12 und/oder dem Drehrichtungssensor 14 in einem Wirkzusammenhang steht. Der Bypass 9 ist mittels einer an dem Hauptkanal 2 und zumindest teilweise in dem Hauptkanal 2 angeordnete Verschalung 7 in der Art einer Sensorbox 6 ausgebildet, wobei die Sensorbox 6 den Bypasskanal 3, den Sensorbereich 4, die Auswertungselektronik 13, die Fluidqualitätssensoren 11, den Drehzahlsensor 12 und den Drehrichtungssensor 14 umfasst.

Eine gleichförmige Geschwindigkeit des Teilstroms 10 ist mittels im Sensorbereich 4 angeordneten Leitelementen 15, erzeugt, wobei die Leitelemente 15 mittels einer oder als eine Verstrebung 17 der Sensorbox 8 ausgebildet sind. Als Fluidqualitätssensoren 11 ist ein erster Gassensor 16, ein zweiter Gassensor 17, ein Partikelsensor 24, ein Temperatursensor 25 und ein Feuchtigkeitssensor 26 vorgesehen, wobei der Partikelsensor 24 innerhalb des Bypasskanals 3 angeordnet ist.

Vorteilhaft können so mittels mehrerer Sensoren im gemeinsamen Zusammenwirken eine sehr genaue und mit einer sehr hohen Messgenauigkeit behafteten Aussage über die Fluidqualität getroffen werden.

Der Drehrichtungssensor 14 und der Drehzahlsensor 12 sind als Hallsensoren 18 ausgebildet, wobei der Drehrichtungssensor 14 und der Drehzahlsensor 12 als gemeinsamer Sensor, gebildet aus zwei Hallsensoren 18, ausgebildet ist. Die Vorrichtung umfasst weiterhin ein Sekundäranemometer 19 in der Art eines Heißfilm-Anemometers 20, wobei das Sekundäranemometer innerhalb des Teilstroms 10, innerhalb des Bypasses 9 des Bypasskanals 3 und des Sensorbereichs 4, angeordnet ist. Auch dargestellt ist, dass das Primäranemometer 5 als Flügelrad-Anemometer 21 ausgebildet ist, wodurch bestehende Technologien kostengünstig vorteilhaft zum Einsatz gebracht werden können.

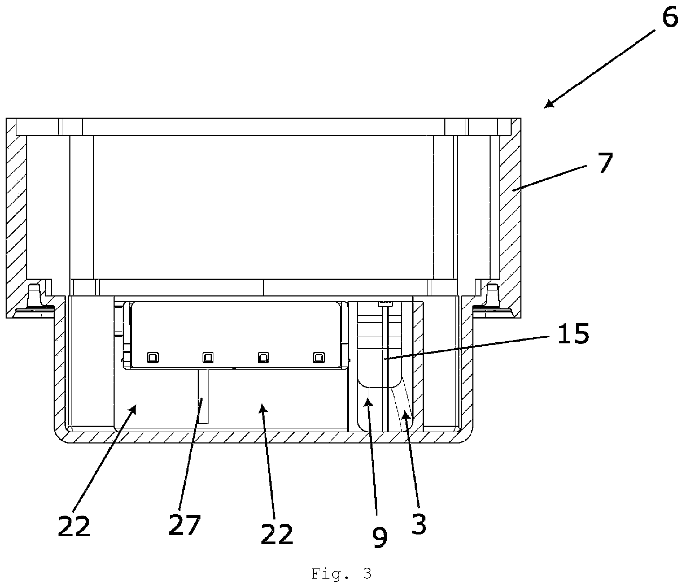

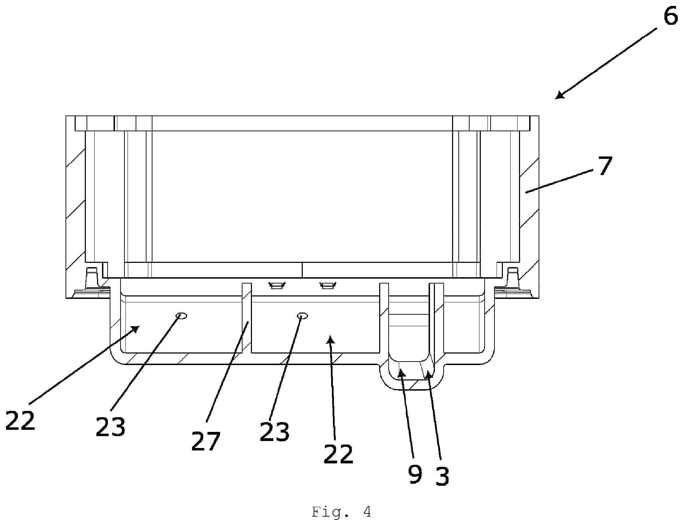

Der Bypasskanal 3 ist derart ausgebildet, dass eine Vergrößerung der Querschnittsfläche des Teilstroms um den Faktor 2 bis 20 zu erzeugt ist, was vorteilhaft die Geschwindigkeit des Fluids innerhalb der Sensorbox 6 verringert und dadurch die Sensoren zuverlässiger und genauer arbeiten können. Dies ist insbesondere in einer Zusammenschau der Figuren 3 und 4 dargestellt.

Weiterhin ist in einer Zusammenschau der Figuren 1 bis 4 dargestellt, dass die Fluidqualitätssensoren 11 in einem Abschattungsbereich 22 der Sensorbox 6 angeordnet sind, wobei zwischen dem Teilstrom 10 und dem Abschattungsbereich 22 ein Fluidaustausch entweder mittels Diffusion, oder mittels Zuluftöffnungen 23 stattfindet, wobei die Zuluftöffnungen 23 klein im Verhältnis zu dem Querschnitt des Teilstroms 10 ausgebildet sind und innerhalb einer Innenwandung der Sensorbox 6 angeordnet sind. Die Fluidqualitätssensoren 11 sind mittels einer Trennwand 27, getrennt voneinander angeordnet, wodurch vorteilhaft eine gegenseitige Beeinflussung, insbesondere thermischer Natur, verringert und ausgeschlossen werden kann.

Darüber hinaus ist in einer Zusammenschau der Figuren 1 bis 4 eine Wandung oder Verstrebung der Verschalung 28, ein gemeinsamer Sensor 31, eine Innenwandung und/oder Trennwand der Sensorbox 32 und eine Innenwandung oder Trennwand 33 dargestellt.

Vorteilhaft kann somit eine Messeinheit gebildet werden, die bevorzugt relevante Messwerte zur Qualitätsbestimmung zur Verfügung stellt, bei der eine gegenseitige Beeinflussung der unterschiedlichen Sensoren vermeiden werden kann. Gerade beim Vorliegen kleiner Volumenströmen, insbesondere in dem Hauptstrom, kann eine hohe Messgenauigkeit erreicht werden und beispielsweise Verschmutzungen detektiert werden, die die Messgenauigkeit negativ beeinflussen könnte.

### Bezugszeichenliste

- 1: Vorrichtung
- 2: Hauptkanal
- 3: Bypasskanal
- 4: Sensorbereich
- 5: Primäranemometer
- 6: Sensorbox
- 7: Verschalung
- 8: Hauptstrom des Fluids
- 9: Bypass
- 10: Teilstrom des Fluids
- 11: Fluidqualitätssensor
- 12: Drehzahlsensor
- 13: Auswertungselektronik
- 14: Drehrichtungssensor
- 15: Leitelemente
- 16: erster Gassensor
- 17: zweiter Gassensor
- 18: Hallsensor
- 19: Sekundäranemometer
- 20: Heißfilm-Anemometer
- 21: Flügelrad-Anemometer
- 22: Abschattungsbereich
- 23: Zuluftöffnungen
- 24: Partikelsensor
- 25: Temperatursensor
- 26: Feuchtigkeitssensor
- 27: Trennwand
- 28: Wandung oder Verstrebung oder Innenwandung oder Trennwand Verschalung oder der Sensorbox
- 29: gemeinsamer Sensor

## Patentansprüche

1. Vorrichtung (1) zur Volumenstrom- und Qualitätsbestimmung eines gasförmigen Fluids umfassend
einen Hauptkanal (2),
einen Bypasskanal (3),
einen Sensorbereich (4), sowie
ein Primäranemometer (5),
wobei der Hauptkanal (2) zur Führung eines Hauptstroms (8) des Fluids ausgebildet ist,
wobei der Bypasskanal (3) und der Sensorbereich (4) einen Bypass (9) zu dem Hauptstrom (8) bilden,
wobei der Bypass (9) insbesondere parallel zu dem Hauptstrom (8) ausgebildet ist,
wobei der Bypasskanal (3) dazu ausgebildet ist, einen Teil des Hauptstroms (8) als Teilstrom (10) in den Sensorbereich (4) zu leiten,
wobei der Sensorbereich (4) wenigstens einen Fluidqualitätssensor (11), wenigstens einen Drehzahlsensor (12) und eine Auswertungselektronik (13) umfasst,
wobei das Primäranemometer (5) innerhalb des Hauptkanals (2) zur Erfassung des gesamten Hauptstroms (8) ausgebildet ist und mit dem Drehzahlsensor (12) in einem Wirkzusammenhang steht.

2. Vorrichtung (1) nach Anspruch 1
**dadurch gekennzeichnet, dass**
der Sensorbereich (4) einen Drehrichtungssensor (14) umfasst,
wobei das Primäranemometer (5) innerhalb des Hauptkanals (2) zur Erfassung des gesamten Hauptstroms (8) ausgebildet ist und mit dem Drehzahlsensor (12) und/oder dem Drehrichtungssensor (14) in einem Wirkzusammenhang steht.

3. Vorrichtung (1) nach Anspruch 1 oder 2
**dadurch gekennzeichnet, dass**
der Bypass (9) mittels einer an dem Hauptkanal (2) angeordneten Verschalung (7),
oder mittels einer zumindest teilweise in dem Hauptkanal (2) angeordnete Verschalung (7)
oder mittels einer Sensorbox (6) ausgebildet ist,
wobei die Verschalung (7) oder die Sensorbox (6) wenigstens den Bypasskanal (3)
und/oder den Sensorbereich (4)
und/oder die Auswertungselektronik (13)
und/oder den wenigstens einen Fluidqualitätssensor (11)
und/oder den Drehzahlsensor (12)
und/oder den Drehrichtungssensor (14)
umfasst.

4. Vorrichtung (1) nach einem der vorangehenden Ansprüche,
**dadurch gekennzeichnet, dass**
eine gleichförmige Geschwindigkeit des Teilstroms (10) mittels Leitelementen (15),
insbesondere mittels im Sensorbereich (4) angeordneten Leitelementen (15),
erzeugt ist,
wobei die Leitelemente (15) bevorzugt mittels einer oder als eine Wandung oder Verstrebung (28) der Verschalung (7) oder der Sensorbox (6) ausgebildet sind.

5. Vorrichtung (1) nach einem der vorangehenden Ansprüche,
**dadurch gekennzeichnet, dass**
als Fluidqualitätssensoren (11) jeweils wenigstens ein Gassensor (16, 17) und/oder ein Partikelsensor (24) und/oder ein Temperatursensor (25) und/oder ein Feuchtigkeitssensor (26) vorgesehen ist,
wobei der Partikelsensor (24) insbesondere innerhalb des Bypasskanals (3) angeordnet ist.

6. Vorrichtung (1) nach einem der vorangehenden Ansprüche,
**dadurch gekennzeichnet, dass**
der Drehrichtungssensor (14) und/oder der Drehzahlsensor (12) als Hallsensor (18) ausgebildet ist/sind,
wobei der Drehrichtungssensor (14) und der Drehzahlsensor (12) insbesondere als gemeinsamer Sensor (29), gebildet aus wenigstens zwei Hallsensoren (18) ausgebildet ist.

7. Vorrichtung (1) nach einem der vorangehenden Ansprüche,
**dadurch gekennzeichnet, dass**
der Bypasskanal (3) derart ausgebildet ist, eine Vergrößerung der Querschnittsfläche des Teilstroms (10) um den Faktor 2, insbesondere um den Faktor 2 bis 10, bevorzugt um den Faktor 2 bis 20 zu erzeugen.

8. Vorrichtung (1) nach einem der vorangehenden Ansprüche,
**dadurch gekennzeichnet, dass**
die Vorrichtung (1) weiterhin ein Sekundäranemometer (19), insbesondere ein Heißfilm-Anemometer (20)
umfasst,
wobei das Sekundäranemometer (19) innerhalb des Teilstroms (10),
insbesondere innerhalb des Bypasses (9) oder des Bypasskanals (3) oder des Sensorbereichs (4),
angeordnet ist.

9. Vorrichtung (1) nach einem der vorangehenden Ansprüche,
**dadurch gekennzeichnet, dass**
das Primäranemometer (5) als Flügelrad-Anemometer (21) ausgebildet ist.

10. Vorrichtung (1) nach einem der vorangehenden Ansprüche,
**dadurch gekennzeichnet, dass**
die Fluidqualitätssensoren (11) in einem Abschattungsbereich (22) der Sensorbox (6) angeordnet sind,
wobei zwischen dem Teilstrom (10) und dem Abschattungsbereich (22) ein Fluidaustausch entweder mittels Diffusion,
oder mittels Zuluftöffnungen (23) stattfindet,
wobei die Zuluftöffnungen (23) klein im Verhältnis zu dem Querschnitt des Teilstroms (10) ausgebildet sind
und insbesondere innerhalb eines Leitelements (15) und/oder einer Innenwandung (28) und/oder einer Trennwand (28) der Sensorbox (6) angeordnet sind

11. Vorrichtung (1) nach einem der vorangehenden Ansprüche,
**dadurch gekennzeichnet, dass**
die Fluidqualitätssensoren (11) mittels wenigstens einer Innenwandung (28), insbesondere einer Trennwand (28), getrennt voneinander angeordnet sind.

12. Verfahren zur Volumenstrom- und Qualitätsbestimmung eines gasförmigen Fluids mittels einer Vorrichtung (1) nach einem der vorangehenden Ansprüche, umfassend die folgenden Verfahrensschritte:
- Abzweigen eines Teils des Hauptstroms (8) des Fluids als Teilstrom (10) mittels des Bypasskanals (3) zu dem Sensorbereich (4) innerhalb des Bypasses (9) und insbesondere Verringern einer Geschwindigkeit des Teilstrom (10), bevorzugt im Sensorbereich (4);
- Erfassen der Fluidqualität im Sensorbereich (4) mittels dem wenigstens einen Fluidqualitätssensor (11);
- Erfassen der Drehzahl und/oder der Drehrichtung des Primäranemometers (5) mittels des Drehzahlsensors (12) und des Drehrichtungssensors (14);
- Auswerten der Sensordaten mittels der Auswertungselektronik (13)

13. Verfahren nach Anspruch 11,
**dadurch gekennzeichnet, dass**
eine Verschmutzung innerhalb des Bypasses (9), insbesondere des Bypasskanals (3) detektiert wird,
wobei insbesondere Messwerte des Primäranemometer (5) mit den Messwerten des Sekundäranemometers (19) verglichen werden,
wobei bei einer Abweichung dieser Messwerte eine Warnmeldung ausgegeben wird,
oder diese Information zur Beeinflussung eines Wartungsintervalls,
insbesondere eines Wartungsintervalls der Vorrichtung,
genutzt wird.
